# EUROPÄISCHE PATENTSCHRIFT

(11) **EP 2 989 548 B1**
(45) Veröffentlichungstag und Bekanntmachung des Hinweises auf die Patenterteilung: **29.11.2017**
(21) Anmeldenummer: 14733582.2
(22) Anmeldetag: 18.06.2014
(51) Int. Cl.: G06F 11/32, G06F 11/34, G06F 21/55, G06F 11/30, G06F 11/16

(54) **ÜBERWACHUNG VON REDUNDANTEN KOMPONENTEN**
MONITORING OF REDUNDANT COMPONENTS
SURVEIILANCE DE COMPOSANTS REDONDANTS

(30) Priorität: 23.07.2013 DE 102013214398
(43) Veröffentlichungstag der Anmeldung: 02.03.2016
(73) Patentinhaber: Siemens Aktiengesellschaft, 80333 München (DE)
(72) Erfinder: BUSSER, Jens-Uwe, 85579 Neubiberg (DE); FALK, Rainer, 85586 Poing (DE); BLÖCHER, Uwe, 82178 Puchheim (DE); FUSENIG, Volker, 80995 München (DE)
(86) Internationale Anmeldenummer: PCT/EP2014/062809
(87) Internationale Veröffentlichungsnummer: WO 2015/010831

(56) Entgegenhaltungen:
- US-A1- 2007 074 011
- US-A1- 2011 271 161
- US-A1- 2013 124 901

## Beschreibung

Die vorliegende Erfindung bezieht sich auf das technische Gebiet der Überwachung einer Komponente welche mindestens einen Prozessorkern umfasst.

In der industriellen Kommunikation ist eine korrekte Funktion von höchster Wichtigkeit. Dies gilt insbesondere in Safetykritischen Steuerungssystemen (z.B. Bahnautomatisierung, Energienetzautomatisierung, Fertigungsautomatisierung, Prozessautomatisierung).

Ein "Power Fingerprinting" zur Erkennung manipulierter Geräte ist beispielsweise aus der WO2012061663 bekannt. Dabei wird der Stromverbrauch eines Gerätes analysiert und mit einem Referenzstromverbrauchsprofil verglichen, um eine Fehlfunktion oder eine Manipulation durch Schadsoftware zu erkennen.

Von der Patentanmeldung DE 10 2011 007 387 ist eine Selbstüberwachung eines Gateways bekannt. Dabei wird überprüft, ob zu einem ausgehenden Datenpaket ein korrespondierendes eingehendes Datenpaket empfangen wurde. Dadurch kann sichergestellt werden, dass ein Gateway nicht bei einer Fehlfunktion selbst Datenpakete erzeugt.

Von der Patentanmeldung DE 10 2011 078 309 ist eine Verschlüsselungskomponente mit Selbstüberwachung bekannt. Diese stellt bei ordnungsgemäß aufgebautem VPN-Tunnel ein Schaltsignal bereit.

Die Patentanmeldung US 2007/074011 A1 offenbart ein Verfahren zur Erstellung von dynamischen Profilen von Prozessorkernen in Prozessoren mit vielen Kernen. Anhand dieser Profile werden die Prozessorkerne bestimmten Gruppen, wie schnelle Kerne oder Kerne mit niedrigem Energieverbrauch, zugeordnet. Im Einzelnen werden Verfahren offenbart anhand welcher das fehlerfreie Funktionieren eines Kerns bestimmt wird.

Von der Firma Infineon ist eine Safety Computing Platform bekannt, bei der ein Safety Monitor Schaltkreis CIC61508 einen Hauptprozessor und die Softwareausführung auf dem Hauptprozessor überwacht. Er kann insbesondere Tests gegenüber festen Testmustern durchführen sowie Ergebnisse zweier unabhängiger Ausführungen vergleichen.

Allgemein sind aus dem Safety-Umfeld mehrkanalige Rechner bekannt. Bei diesen wird eine Berechnung in Hardware mehrfach redundant durchgeführt. Es ist weiterhin Coded Processing bekannt, bei dem dieselbe Berechnung auf einer Hardware mit unterschiedlich codierten Daten erfolgt.
Die Berechnung der Kreuzkorrelation zwischen zwei Signalen ist ein grundlegendes, allgemein bekanntes Verfahren zur Signalverarbeitung. Sie wird z.B. bei Empfängern eingesetzt, um ein Signal zu dekodieren (siehe z.B. http://dsp-book.narod.ru/DSPCSP/14 .pdf = "Digital Signal Processing: A Computer Science Perspective Jonathan Y. Stein Copyright © 2000 John Wiley & Sons, Inc. Print ISBN 0-471-29546-9 Online ISBN 0-471-20059-X, Seiten 349-392."). Weiterhin bekannt sind Störmeldungs-Kontakte: Diese zeigen durch Statuswechsel (offen/geschlossen) den Ausfall eines Gerätes an, beispielsweise bei Verlust der Spannungsversorgung oder bei internen Störungen. Dieser Kontakt wird getrennt von den Kommunikationsleitungen (Ethernet o.ä.) verdrahtet und ermöglicht eine Statusbestimmung auch dann noch, wenn das Gerät auf Anfragen über die Kommunikationsleitung nicht mehr antworten kann.
Ein Schutz gegen zufällige und auch systematische Fehler wird durch geeignete Safety-Maßnahmen gewährleistet. Es wird jedoch in zunehmenden Maß auch ein Schutz gegenüber absichtlichen Angriffen (IT Security) benötigt. Es soll jedoch gewährleistet werden, dass etablierte Safety-Mechanismen nicht durch Security-Maßnahmen beeinflusst werden. Es besteht ein Bedarf an wirksamen für Steuerungsumgebungen geeigneten IT-Security-Maßnahmen. Der vorliegenden Erfindung liegt die Aufgabe Zugrunde diesem Bedarf nachzukommen. Diese Aufgabe wird durch die in den unabhängigen Ansprüchen 1 und 15 beschriebenen Maßnahmen gelöst. Vorteilhafte Ausgestaltungen der Erfindung sind in weiteren Ansprüchen angegeben.

Gemäß einem ersten Aspekt betrifft die Erfindung ein Verfahren zur Überwachung einer Komponente. Die Komponente umfasst mindestens einen Prozessorkern. Gemäß dem Verfahren wird ein Eingangssignal an den Prozessorkern angelegt. Ein weiteres Eingangssignal wird an einen weiteren Prozessorkern angelegt. Ein durch das Anlegen des Eingangssignals an den Prozessorkern beeinflusstes Profil des Prozessorkerns wird ermittelt. Ein durch das Anlegen des weiteren Eingangssignals an den weiteren Prozessorkern beeinflusstes weiteres Profil des weiteren Prozessorkerns wird ermittelt. Das Profil und das weitere Profil werden verglichen. Eine mangelhafte Ähnlichkeit des Profils zu dem weiteren Profil wird als ein Hinweis auf ein fehlerhaftes Funktionieren der Komponente interpretiert. Insbesondere kann damit beispielsweise erkannt werden, ob die überwachte Komponente manipuliert ist.
Gemäß einem weiteren Aspekt betrifft die Erfindung eine Vorrichtung zur Überwachung einer Komponente welche mindestens einen Prozessorkern umfasst. Die Vorrichtung umfasst die zu überwachende Komponente, einen weiteren Prozessorkern, ein Ermittlungsmittel und ein Vergleichsmittel. Das Ermittlungsmittel ist ausgestaltet, ein Profil des Prozessorkerns zu ermitteln. Das Profil ist durch ein an den Prozessorkern angelegtes Eingangssignal beeinflusst. Zudem ist das Ermittlungsmittel ausgestaltet, ein weiteres Profil des weiteren Prozessorkerns zu ermitteln. Das weitere Profil ist durch ein an den weiteren Prozessorkern angelegtes weiteres Eingangssignal beeinflusst. Das Vergleichsmittel ist ausgestaltet, das Profil und das weitere Profil zu vergleichen und ein Fehlersignal zu erzeugen, falls ein Vergleichsresultat eines durch das Vergleichsmittel durchgeführten Vergleichs eine mangelhafte Ähnlichkeit des Profils zu dem weiteren Profil ist.

Die Erfindung wird nachfolgend anhand der Zeichnung beispielsweise näher erläutert. Dabei zeigt:

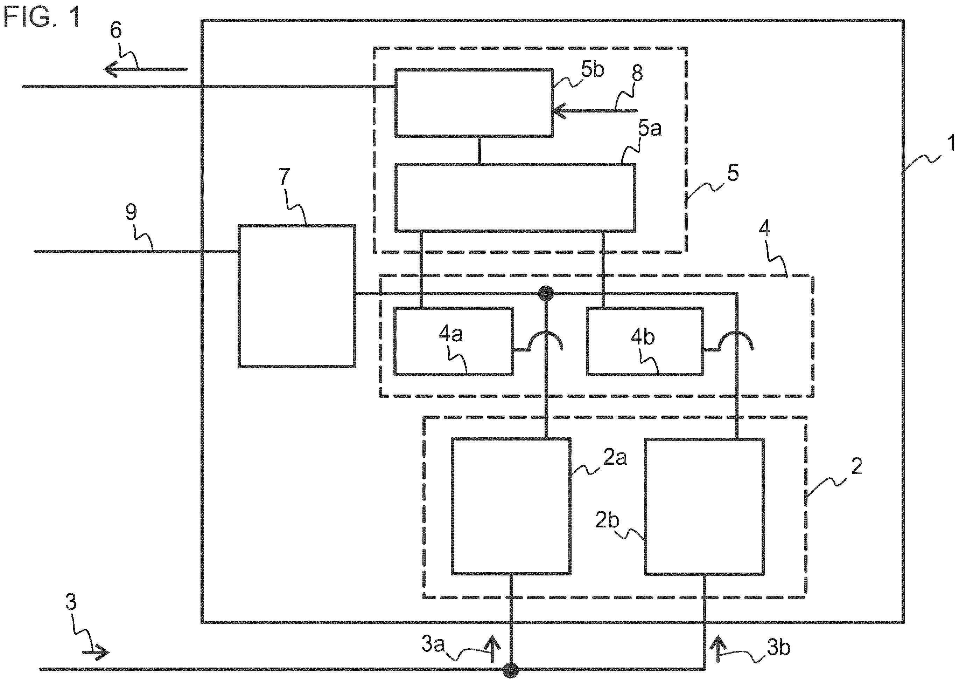

Figur 1 einen zweikanaligen Rechner mit zwei Prozessorkernen gemäß einer Ausführungsform der Erfindung.

Figur 1 zeigt eine als Kontrolleinheit ausgestaltete Vorrichtung 1 gemäß einer bevorzugten Ausführungsform der Erfindung. Die Kontrolleinheit 1 umfasst eine zu überwachende Komponente 2, eine Ermittlungseinheit 4 und ein Vergleichsmittel 5. Die Komponente 2 umfasst einen Prozessorkern 2a und einen weiteren Prozessorkern 2b. Die Kontrolleinheit 1 ist geeignet die Komponente 2, respektive den Prozessorkern 2a und/oder den Prozessorkern 2b, zu überwachen. Da die Kontrolleinheit ausgestaltet ist, die Komponente 2 zu überwachen, ist sie auch ausgestaltet die Kontrolleinheit 1 zumindest teilweise zu überwachen.

Ferner umfasst die Kontrolleinheit 1 auch eine Energieeinheit 7, beispielsweise ein Transformator, welcher die Spannung einer externen elektrischen Energieversorgung 9 auf ein geeignetes Spannungsniveau transformiert und der Komponente 2, respektive den Prozessorkernen 2a, 2b zur Verfügung stellt.

Das Ermittlungsmittel 4 ist ausgestaltet, ein durch ein an den Prozessorkern 2a angelegtes Eingangssignal 3a beeinflusstes Profil des Prozessorkerns 2a zu ermitteln und ein durch ein an den weiteren Prozessorkern 2b angelegtes weiteres Eingangssignal 3b beeinflusstes weiteres Profil des weiteren Prozessorkerns 2b zu ermitteln. Im vorliegenden Ausführungsbeispiel sind die Eingangssignale 3, 3a, 3b identisch und werden über dieselbe Leitung gleichzeitig an die beiden Prozessorkerne angelegt. In alternativen Ausführungsformen die weiter unten beschrieben werden, sind die Eingangssignale 3a und 3b nicht identisch.

Gemäß der in Figur 1 dargestellten Ausführungsform umfasst das Ermittlungsmittel 4 eine als Sensor 4a ausgestaltete Strommesseinheit 4a und eine als weiterer Sensor 4b ausgestaltete weitere Strommesseinheit 4b. Die Strommesseinheit 4a ist ausgestaltet das Profil des Prozessorkerns 2a zu ermitteln, während Die Strommesseinheit 4b ausgestaltet ist, das weitere Profil des weiteren Prozessorkerns 2b zu ermitteln.

Gemäß der in Figur 1 dargestellten Ausführungsform umfasst das Ermittlungsmittel 5 einen Kreuzkorrelator 5a, welcher ausgestaltet ist, eine Kreuzkorrelation des Profils und des weiteren Profils vorzunehmen, und das Ergebnis der Kreuzkorrelation an einen Komparator 5b zu übergeben. Der Kreuzkorrelator 5b ist ebenfalls Teil des Ermittlungsmittels 5. Der Komparator 5b vergleicht das Ergebnis der Kreuzkorrelation mit einem Schwellwert 8. Übersteigt das Ergebnis der Kreuzkorrelation den Schwellwert 8, so kann darauf geschlossen werden, dass das Profil und das weitere Profil ausreichend ähnlich sind, also ausreichend mit einander übereinstimmen. Diese ausreichende Ähnlichkeit des Profils zu dem weiteren Profil wird als ein Hinweis für ein fehlerfreies Funktionieren der Komponente 2 interpretiert. Unterschreitet hingegen das Ergebnis der Kreuzkorrelation den Schwellwert 8, so kann darauf geschlossen werden, dass das Profil und das weitere Profil nicht ausreichend mit einander übereinstimmen, die Ähnlichkeit des Profils zu dem weiteren Profil also mangelhaft ist. Diese mangelhafte Ähnlichkeit des Profils zu dem weiteren Profil wird als ein Hinweis für ein fehlerhaftes Funktionieren der Komponente 2 interpretiert. Das Vergleichsmittel 5 ist somit ausgestaltet, das Profil und das weitere Profil zu vergleichen und anhand des Vergleichs ein Vergleichsresultat zu erzeugen. Falls das Vergleichsresultat eines durch das Vergleichsmittel 5 durchgeführten Vergleichs eine mangelhafte Ähnlichkeit des Profils zu dem weiteren Profil ist, wird dies als ein Hinweis auf ein fehlerhaftes Funktionieren der Komponente 2 interpretiert wird, beispielsweise indem das Vergleichsmittel als Statussignal ein Fehlersignal 6 erzeugt.

Mit andern Worten zeigt die Figur 1 einen zweikanaligen (dual lane) Rechner 1 mit zwei CPUs 2a, 2b. Nicht gezeigt ist ein oft vorhandener Safety-Watchdog, der z.B. die Berechnungsergebnisse der beiden Kanäle 2a, 2b vergleicht.

Gemäß der in Figur 1 dargestellten Ausführungsform ist je Kanal 2a, 2b ein Sensor 4a, 4b vorgesehen, der das Stromverbrauchsprofil des jeweiligen Kanals 2a, 2b erfasst und jeweils als ein das jeweilige Stromverbrauchsprofil umfassendes Signal ausgibt. Diese beiden Signale werden der Kreuzkorrelations-Einheit 5a bereitgestellt, die die Kreuzkorrelation der beiden Stromverbrauchsprofile bestimmt. Dies kann z.B. durch einen Digitalen Signalprozessor (DSP) oder einen programmierbaren Logikbaustein (FPGA) erfolgen. Das Ergebnis wird mit einem festen oder vorgebbaren Schwellwert 8 (Threshold) verglichen. Falls der Schwellwert 8 überschritten wird, so liegt ein regulärer Betriebszustand vor, d.h. die beiden Kanäle 2a, 2b weisen ein hinreichend ähnliches Stromverlaufsprofil auf. Dies kann als Statussignal 6 bereitgestellt werden.

In einer anderen Variante (nicht dargestellt) kann z.B. bei Unterschreiten des Schwellwerts 8 ein Reset ausgelöst (z.B. indem einem Safety-Watchdog ein entsprechendes Signal bereitgestellt wird) oder es können Ausgangsbausteine, an denen Steuersignale bereitgestellt werden (nicht dargestellt) in einen inaktiven Zustand versetzt werden (z.B. hochohmig oder 0V oder auf einen ungültigen Ausgabewert).

Es können auch andere oder mehrere Sensoren eines Kanals 2a, 2b vorgesehen sein. Auch kann eine, beide oder alle der CPU 2a, 2b jeweils einen integrierten Sensor aufweisen, der das Stromverbrauchsprofil erfasst. Eine Multi-Core CPU kann je Core einen Sensor vorsehen und eine integrierte Korrelationseinheit 5a und eine integrierte Schwellwertvergleichseinheit 5b. Dadurch kann eine mehrkanalige CPU (multi core CPU) mehrere Prozessorkerne intern vergleichen. Auch kann der Stromverbrauch weiterer Komponenten eines Kanals, z.B. Ein-/Ausgabebausteine, Kommunikationsschnittstellen, Speicherbausteine, erfasst werden. In einer Variante ist das Vergleichsmittel 5 (umfassend die Kreuzkorrelationseinheit 5a und die Vergleichseinheit 5b) konfigurierbar, und es kann festgelegt werden, welche Prozessorkerne überwacht werden sollen. Sind z.B. 4 Prozessorkerne (Core0, Core1, Core2, Core3) vorgesehen, so kann z.B. konfiguriert werden, dass Core0 und Core3 überprüft werden sollen. Es können mittels der Erfindung selbstverständlich auch mehr als zwei Kanäle überwacht werden. So kann z.B. Core0, Core1 und Core 3 überwacht werden, ob deren Stromverbrauchs-/Abstrahlprofile jeweils paarweise hinreichend stark korreliert sind.
Die Übertragung des als Fehlersignal ausgestalteten Alarms kann beispielsweise erfolgen über die Verkabelung des Störmeldekontakts des Geräts, indem der Komparator 5b ebenfalls einen eigenen Störmeldekontakt bereitstellt, der mit dem Störmeldekontakt des Gerätes in Reihe geschaltet wird. Ein Signal über die Verkabelung des Störmeldekontakts bedeutet dann, dass entweder das Gerät ausgefallen ist oder der Komparator eine Anomalie erkannt hat (oder beides gleichzeitig). Eine Unterscheidung dieser Möglichkeiten ist so aber nicht möglich, weil nur 1 bit übertragen werden kann. Möchte man den Alarm des Komparators von einem Geräteausfall unterscheiden können, so wird der Störmeldekontakt des Komparators über eine eigene Verkabelung an ein Überwachungsgerät angeschlossen.

Gemäß einer bevorzugten Ausführungsform der Erfindung ist der erste Ausgangspunkt das bekannte Power Fingerprinting, bei dem ein aktuelles Stromverbrauchsprofil mit einem Referenzmuster verglichen wird. Der zweite Ausgangspunkt ist ein Safety Watchdog, der zwei Datenergebnisse auf Gleichheit prüft.

Gemäß der in Figur 1 dargestellten Ausführungsform wird somit vorgeschlagen, das Stromverbrauchsprofil von zumindest zwei redundanten Realisierungen von Stromverbrauchsprofilen der beiden Prozessorkerne 2a, 2b durch Kreuz-Korrelation zu vergleichen. Dadurch wird ein Safety Monitor nicht auf Datenebene, sondern auf Stromverbrauchsebene realisiert. Ein Safety-Monitor überwacht ein Rechensystem 1, 2. Bei einem erkannten unzulässigen Zustand kann z.B. ein Alarmsignal als Statussignal 6 bereitgestellt werden. Darauf kann z.B. die Kontrolleinheit 1 oder ein durch die Kontrolleinheit 1, die Komponente 2 oder ein durch die Kontrolleinheit 1, respektive durch die Komponente 2 kontrolliertes externes System zu einem Neustart, d.h. einem Reboot veranlasst werden oder in einen eigensicheren Zustand versetzt werden. Damit werden insbesondere Fehlerangriffe, auch fault injection attacks genannt, deutlich erschwert, da für einen erfolgreichen Angriff beide Prozessorkerne 2a, 2b derart manipuliert werden müssten, dass sie ein identisches Fehlerverhalten aufweisen. In einer Variante sind der erste Prozessorkern 2a und der zweite Prozessorkern 2b mit unterschiedlichen Maßnahmen Tamper-geschützt (kein Zusatzschutz, Vergießen mit Epoxyd-Harz, Anbringen einer metallischen Schutzhülle auf der Platine). Dies hat den Vorteil, dass ein Angreifer für einen unbemerkten Angriff die unterschiedlichen Tamperschutzmaßnahmen zeitgleich umgehen müsste.

Gemäß der in Figur 1 dargestellten Ausführungsform muss die Kreuzkorrelation (Peak) einen vorgebbaren Schwellwert überschreiten, um einen korrekten Betrieb zu erkennen. In einer anderen Variante werden sowohl die Autokorrelationsfunktion und die Kreuzkorrelationsfunktion berechnet. Abhängig von der Autokorrelation (Peak) wird der Schwellwert bestimmt, z.B. 0,5* Peak_autokorrelation oder 0,7* Peak_autokorrelation. In einer Variante wird weiterhin durch Kreuzkorrelation eine Zeitverschiebungsinformation, d.h. die zeitliche Position des Haupt-Peaks, ermittelt. Ein korrekter Betrieb wird erkannt, wenn der so ermittelte Zeitversatz in einem vorgebbaren Zeitintervall liegt.

In einer weiteren Variante erfolgt, wenn kein gemeinsamer Takt für die beiden redundanten Prozessorkerne 2a, 2b vorhanden ist, eine Regelung der Takterzeugung der beiden redundanten Prozessorkerne 2a, 2b. Anhand der Kreuzkorrelation des Stromverbrauchs kann der Zeitversatz ermittelt werden. Dieser dient als Eingang einer Regelschleife für die Takterzeugung. Somit kann ein zeitliches Auseinanderdriften von zwei identischen, redundanten Prozessorkerne 2a, 2b mit jeweils autonomer Takterzeugung verhindert werden.

Das in Figur 1 dargestellte Ausführungsbeispiel offenbart eine Vorrichtung 1 zur vorzugsweise automatischen Überwachung einer Komponente 2. Die Komponente 2 umfasst mindestens einen Prozessorkern 2a. Die Vorrichtung 1 umfasst die zu überwachende Komponente 1 und/oder 2, einen weiteren Prozessorkern 2b, ein Ermittlungsmittel 4 und ein Vergleichsmittel 5. Das Ermittlungsmittel 4 ist ausgestaltet, ein Profil des Prozessorkerns 2a zu ermitteln. Das Profil ist durch ein an den Prozessorkern 2a angelegtes Eingangssignal 3a beeinflusst. Das Ermittlungsmittel 4 ist zudem ausgestaltet, ein weiteres Profil des weiteren Prozessorkerns 2b zu ermitteln. Das weitere Profil ist durch ein an den weiteren Prozessorkern 2b angelegtes weiteres Eingangssignal 3b beeinflusst. Das Vergleichsmittel 5 ist ausgestaltet, das Profil und das weitere Profil zu vergleichen und als Statussignal ein Fehlersignal 6 zu erzeugen, falls ein Vergleichsresultat eines durch das Vergleichsmittel 5 durchgeführten Vergleichs eine mangelhafte Ähnlichkeit des Profils zu dem weiteren Profil ist.

Gemäß einem bevorzugten Ausführungsbeispiel der Erfindung wird die Komponente 2 und/oder die Vorrichtung 1 gemäß folgendem Verfahren vorzugsweise automatisch überwacht: An den Prozessorkern 2a wird ein Eingangssignal 3a angelegt. An den weiteren Prozessorkern 2b wird ein weiteres Eingangssignal 3b angelegt. Ein durch das Anlegen des Eingangssignals 3a an den Prozessorkern 2a beeinflusstes Profil des Prozessorkerns 2a und ein durch das Anlegen des weiteren Eingangssignals 3b an den weiteren Prozessorkern 2b beeinflusstes weiteres Profil des weiteren Prozessorkerns 2b wird (vorzugsweise automatisch) ermittelt. Das Profil und das weitere werden (vorzugsweise automatisch) verglichen. Eine mangelhafte Ähnlichkeit des Profils zu dem weiteren Profil wird (vorzugsweise automatisch) als ein Hinweis auf ein fehlerhaftes Funktionieren der Komponente interpretiert, beispielsweise durch Ausgabe eines als Fehlersignal ausgestalteten Statussignals 6.

Falls der Vergleich eine ausreichende Ähnlichkeit des Profils zu dem weiteren Profil ergibt, so wird dies (vorzugsweise automatisch) als ein Hinweis für ein fehlerfreies Funktionieren der Komponente 1 oder 2 interpretiert. Vorzugsweise ist das Vergleichsmittel 5 ausgestaltet, als Statussignal 6 kein Fehlersignal zu erzeugen, falls ein Vergleichsresultat des durch das Vergleichsmittel 5 durchgeführten Vergleichs eine ausreichende Ähnlichkeit des Profils zu dem weiteren Profil ist. Dabei kann das Vergleichsmittel kein Statussignal ausgeben, oder ein Statussignal 6 welches anzeigt, dass das Vergleichsmittel 5 keinen Fehler der Komponente 2 festgestellt hat.

Vorzugsweise umfasst das Ermittlungsmittel 4 eine Strommesseinheit 4a, 4b oder eine Leistungsmesseinheit für den Prozessorkern 2a und/oder den weiteren Prozessorkern 2b. Somit umfasst oder ist das Profil und das weitere Profil jeweils ein zeitlicher Verlauf der Leistungsaufnahme oder ein Stromverbrauchsprofil des jeweiligen Prozessorkerns 2a, 2b. Die Messung der Leistungsaufnahme, respektive das Stromverbrauchsprofil des jeweiligen Prozessorkerns, kann beispielsweise mittels elektromagnetischer Abstrahlung des jeweiligen Prozessorkerns oder eines Shunts für den jeweiligen Prozessorkern ermittelt werden.

Gemäß einer bevorzugten Ausführungsform umfasst das Vergleichsmittel 5 einen Kreuzkorrelator 5a und einen Komparator 5b. Der Kreuzkorrelator ermittelt die Kreuzkorrelation des ermittelten Profils des Prozessorkerns 2a und des ermittelten Profils des weiteren Prozessorkerns 5b. Der Komparator vergleicht das Ergebnis der ermittelten Kreuzkorrelation mit einem Schwellwert 8. Falls das Ergebnis der ermittelten Kreuzkorrelation kleiner ist als der Schwellwert, wird dies als ein fehlerhaftes Funktionieren der Komponente 2 interpretiert, indem als Statussignal 6 ein Fehlersignal bereitgestellt wird. Das Vergleichsmittel 5 ist somit ausgestaltet, den Vergleich mittels einer Ermittlung einer Kreuzkorrelation des Profils und des weiteren Profils vorzunehmen. Alternativ dazu kann der Vergleich auch mittels einer anderen Merkmalsextraktion, wie beispielsweise mittels eines Vergleichs der Mittelwerte und/oder der Peakwerte und/oder des Frequenzspektrums des Profils und des weiteren Profils vorgenommen werden. Dabei wird beispielsweise das erfasste Zeitprofil transformiert (z.B. mit FFT Fourier-Transformation) und das transformierte Signal analysiert. Der Kreuzkorrelator 5a und der Komparator 5b brauchen nicht zwingend wie in Figur 1 gezeigt in einem als einheitliches Bauteil ausgeführten Vergleichsmittel 5 integriert zu sein. Das Vergleichsmittel 5 kann auch einen als separates Bauteil ausgeführten Kreuzkorrelator 5a und einen separates Bauteil ausgeführten Komparator 5b ausgeführt sein.
Gemäß einer bevorzugten Ausführungsform wird die mangelhafte Ähnlichkeit des Profils und des weiteren Profils mittels eines Schwellwertes ermittelt. Dabei wird beispielsweise ein Ähnlichkeitsmaß ermittelt, das ermittelte Ähnlichkeitsmaß mit Schwellwert verglichen und im Falle eines Über- oder Unterschreiten des Schwellwertes ein Fehlersignal bereitgestellt.

Gemäß einer bevorzugten Ausführungsform sind wie im anhand von Figur 1 dargestellten Ausführungsbeispiel die an den Prozessorkern 2a und an den weiteren Prozessorkern 2b angelegten Signale 3a, 3b identisch und/oder gleichzeitig. Vorteil eines identischen Signals 3 an den beiden Prozessorkernen 2a, 2b (Im Gegensatz beispielsweise zu einem Vergleich eines Stromverbrauchsprofil eines Prozessorkerns mit einem gespeicherten Referenzstromverbrauchsprofil) ist, dass an beiden Prozessorkernen dasselbe Signal anliegt, und somit eine Abweichung der Profile der beiden Prozessorkerne mit hoher Wahrscheinlichkeit auf eine Fehlfunktion der Komponente 2 hinweist. Mit Andern Worten, es spielt dann keine Rolle, welches Eingangssignal angelegt wird und der Schwellwert 8, bei dem ein fehlerhaftes Funktionieren der Komponente 2 festgestellt wird, kann niedriger gesetzt werden.

Gemäß einer weiteren Ausführungsform ist das Eingangssignal 3a und das weitere Eingangssignal 3b unterschiedlich codiert, vorzugsweise jedoch inhaltlich identisch. In einem solchen Fall ist zu erwarten, dass sich die beiden Prozessorkerne bis auf die Decodierungsarbeit gleich verhalten, was noch immer einen tieferen Schwellwert 8 erlaubt, als bei einem Vergleich des Profils mit einem auf einem unterschiedlichen Eingangssignal gespeicherten Referenzprofil. Vorteil der unterschiedlichen Codierung (z.B. Codierung als bitweise inversen Wert, als Komplementärwert oder als maskierten Wert, d.h. Addition und/oder Multiplikation mit Maskierungswert) ist, dass bestimmte Hardware-Fehler erkannt werden können (ein bit ist fest auf 0 oder 1).

In einer weiteren Variante wird abhängig vom Eingangssignal 3a ein fest gespeichertes Ersatzsignal 3b ausgewählt. Dies hat den Vorteil, dass Angriffe, die ein Fehlverhalten durch ungültig codierte Eingabesignale hervorrufen, erkannt werden können, da der zweiten Komponente nur gespeicherte und damit zuverlässig gültig codierte Eingangssignale bereitgestellt werden.

Das an den ersten Prozessorkern angelegte Eingangssignal und das an den zweiten Prozessorkern angelegte Eingangssignal können gleichzeitig (wie in Figur 1 dargestellt) oder andererseits zeitversetzt (verzögert) angelegt werden. Der Vorteil eines gleichzeitigen Anlegens eines vorzugsweise identischen Signals an die beiden Prozessorkerne 2a, 2b ist, dass das Ergebnis zeitnah bestimmt werden kann. Der Vorteil eines zeitversetzten Anlegens ist, dass eine temporäre Störung, welche z.B. durch elektromagnetische Einstrahlung verursacht wird, erkannt werden kann, wenn das Eingangssignal zeitverzögert bearbeitet wird, d.h. wenn die Störung an unterschiedlichen Zeitpunkten des Eingangssignals wirkt, und daher die Kreuzkorrelation der Profils und des weiteren Profils reduziert wird.

Vorzugsweise ist das Vergleichsmittel 5 ausgestaltet, einen Zeitversatz zwischen dem Profil und dem weiteren Profil zu ermitteln. Die mangelhafte Ähnlichkeit wird in dieser Ausführungsform durch ein Überschreiten eines Zeitversatzschwellwertes 8 durch den ermittelten Zeitversatz festgestellt. Vorteilhaft an dieser Ausführungsform ist, dass ein zeitliches Fehlverhalten erkannt werden kann. Bei Steuerungssystemen ist nicht nur das funktional korrekte Ergebnis wichtig, sondern es muss auch sichergestellt sein, dass ein Steuersignal zum korrekten Zeitpunkt ausgegeben wird.

Die beiden Prozessorkerne können gleich oder unterschiedlich getaktet sein. Gemäß einer weiteren Ausführungsform umfasst die Vorrichtung 1 im Falle eines unterschiedlichen oder zeitverzögerten Taktes eine Regelung, welche ausgestaltet ist, den Zeitversatz der Takte des Prozessorkerns 2a und/oder des weiteren Prozessorkerns 2b zu verringern.

Im Fall einer mangelhaften Ähnlichkeit des Profils zu dem weiteren Profil wird vorzugsweise eine beliebige Auswahl der folgenden Maßnahmen ergriffen:
- Ausgabe eines Fehlersignals oder Alarmsignals als Statussignal 6;
- Durchführen eines Neustarts der Vorrichtung 1 und/oder der Komponente 2 und/oder eines mittels der Komponente 2 kontrollierten Systems;
- Versetzten der Vorrichtung 1 und/oder der Komponente 2 und/oder eines mittels der Komponente 2 kontrollierten Systems in einen eigensicheren Zustand und/oder in einen eingeschränkten Betriebsmodus;
- Durchführung zusätzlicher Überprüfungen;
- Löschen, für ungültig zu erklären oder aktualisieren eines kryptographischen Schlüssels, vorzugsweise falls davon ausgegangen werden muss, dass der Schlüssel einem Angreifer bekannt sein könnte.

Alternativ zu dem anhand von Figur 1 dargestellten Ausführungsbeispiel braucht es sich bei der Vorrichtung 1 nicht um eine Multiprozessorkomponente zu handeln, da der weitere Prozessorkern 2b auch von einer weiteren von der Komponente 1 separaten Komponente umfasst werden kann.
Vorzugsweise ist der Prozessorkern 2a und der weitere Prozessorkern 2b redundant betreibbar. Dies bedeutet, dass sie funktional identisch betrieben werden. Dies hat den Vorteil, dass der Stromverbrauch des ersten und des zweiten Prozessorkerns bei ordnungsgemäßem Betrieb eine sehr hohe Übereinstimmung aufweisen. Der Prozessorkern 2a und 2b können identische Komponenten sein. Sie können jedoch auch unterschiedliche, jedoch funktional gleiche Komponenten sein, z.B. Prozessorkerne unterschiedlicher Hersteller oder Prozessorkerne, die an unterschiedlichen Fertigungsstätten oder mittels unterschiedlicher Fertigungstechnologien realisiert wurden. Dies hat den Vorteil, dass ein Fehlverhalten nur eines Prozessorkerns erkennbar ist. So kann z.B. der Fall erkannt werden, wenn ein Hersteller einen Prozessorkern fehlerhaft oder mit einer unerwünschten Zusatzfunktionalität erstellt hat (Hardware-Trojaner, Backdoor). Wird eine solche fehlerhafte oder unerwünschte Funktion zur Laufzeit genutzt, so kann dies anhand des unterschiedlichen Stromverbrauchs des Prozessorkerns 2a und des Prozessorkerns 2b erkannt werden.
Gemäß einer Ausführungsform der Erfindung werden redundante Komponenten durch Kreuzkorrelation der Stromverbrauchsprofile überwacht. Es sind jedoch grundsätzlich beliebige Verfahren zur Signalverarbeitung und Mustererkennung anwendbar. So können z.B. Merkmale der Stromverbrauchsprofile mit von der Mustererkennung bekannte Algorithmen extrahiert und auf Übereinstimmung verglichen werden.

Gemäß bevorzugten Ausführungsformen der Erfindung kann die korrekte Funktion eines Gerätes überwacht werden, ohne spezielle Datenschnittstellen auf der Haupt-CPU- vorzusehen, im Gegensatz z.B. für die SPI-Schnittstelle der Haupt-CPU bei dem Infineon Safety-Monitor.

Gemäß bevorzugten Ausführungsformen der Erfindung kann die Überwachung rückwirkungsfrei bei verfügbaren Altgeräten ergänzt werden. Es muss nur ein Stromverbrauchssensor ergänzt werden. Dadurch kann z.B. ein Realtime-System oder ein Safety-kritisches System überwacht werden, ohne die Hauptfunktionalität modifizieren zu müssen. Dadurch ist der Ansatz z.B. bei Altgeräten anwendbar. Auch ist der Ansatz anwendbar, falls eine Zulassung, z.B. Safety, erforderlich ist oder eine Aktualisierung, z.B. Viren-Pattern, nicht zulässig oder praktikabel ist.

## Patentansprüche

1. Verfahren zur Erkennung einer Manipulation und automatischen Überwachung einer Komponente (1, 2) welche mindestens einen Prozessorkern (2a) umfasst, das Verfahren umfassend die Verfahrensschritte:
- Anlegen eines Eingangssignals (3a) an den Prozessorkern (2a) und Anlegen eines weiteren Eingangssignals (3b) an einen weiteren Prozessorkern (2b);
- Ermitteln eines durch das Anlegen des Eingangssignals (3a) an den Prozessorkern (2a) beeinflussten Profils des Prozessorkerns (2a) und eines durch das Anlegen des weiteren Eingangssignals (3b) an den weiteren Prozessorkern (2b) beeinflussten weiteren Profils des weiteren Prozessorkerns (2b);
- Vergleichen des Profils und des weiteren Profils,
wobei eine mangelhafte Ähnlichkeit des Profils zu dem weiteren Profil als ein Hinweis auf ein fehlerhaftes Funktionieren der Komponente (1, 2) interpretiert wird,
wobei im Fall einer mangelhaften Ähnlichkeit des Profils zu dem weiteren Profil
- ein Alarmsignal ausgegeben wird und/oder
- ein Neustart der Komponente (1, 2) durchgeführt wird und/oder
- die Komponente (1, 2) in einen eigensicheren Zustand versetzt wird und/oder
- ein mittels der Komponente (1, 2) kontrolliertes System in einen eigensicheren Zustand versetzt wird und/oder
- die Komponente (1, 2) in einen eingeschränkten Betriebsmodus versetzt wird und/oder
- ein mittels der Komponente (1, 2) kontrolliertes System in einen eingeschränkten Betriebsmodus versetzt wird und/oder
- zusätzliche Überprüfungen durchgeführt werden und/oder
- ein kryptographischer Schlüssel gelöscht, für ungültig erklärt oder aktualisiert wird.

2. Verfahren nach Anspruch 1, wobei eine ausreichende Ähnlichkeit des Profils zu dem weiteren Profil als ein Hinweis für ein fehlerfreies Funktionieren der Komponente (1, 2) interpretiert wird.

3. Verfahren nach einem der vorhergehenden Ansprüche, wobei das Profil und das weitere Profil jeweils einen zeitlichen Verlauf der Leistungsaufnahme oder jeweils einen zeitlichen Verlauf des Stromverbrauchs des jeweiligen Prozessorkerns (2a, 2b) umfassen oder sind.

4. Verfahren nach einem der vorhergehenden Ansprüche, wobei das Vergleichen des Profils und des weiteren Profils mittels einer Ermittlung einer Kreuzkorrelation des Profils und des weiteren Profils oder mittels einer anderen Merkmalsextraktion, wie beispielsweise mittels eines Vergleichs der Mittelwerte und/oder der Peakwerte und/oder des Frequenzspektrums des Profils und des weiteren Profils vorgenommen wird.

5. Verfahren nach einem der vorhergehenden Ansprüche, wobei die mangelhafte Ähnlichkeit des Profils und des weiteren Profils mittels eines Schwellwertes (8) ermittelt wird.

6. Verfahren nach einem der vorhergehenden Ansprüche, wobei ein Zeitversatz zwischen dem Profil und dem weiteren Profil ermittelt wird, und wobei die mangelhafte Ähnlichkeit ein Überschreiten eines Zeitversatzschwellwertes (8) durch den ermittelten Zeitversatz ist.

7. Verfahren nach einem der vorhergehenden Ansprüche, wobei mittels einer Regelung des Taktes des Prozessorkerns (2a) und/oder des weiteren Prozessorkerns (2b) der Zeitversatz zwischen dem Profil und dem weiteren Profil verringert wird.

8. Verfahren nach einem der vorhergehenden Ansprüche, wobei der weitere Prozessorkern (2b) durch die Komponente (1, 2) umfasst ist.

9. Verfahren nach einem der vorhergehenden Ansprüche, wobei der Prozessorkern (2a) und der weitere Prozessorkern (2b) redundant betrieben werden.

10. Verfahren nach einem der vorhergehenden Ansprüche, wobei ein Mittel zur Ermittlung des Profils und vorzugsweise zur Ermittlung des weiteren Profils durch die Komponente (1, 2) umfasst ist.

11. Verfahren nach einem der vorhergehenden Ansprüche, wobei das Eingangssignal (3a) und das weitere Eingangssignal (3b) identisch sind.

12. Verfahren nach einem der Ansprüche 1 bis 10, wobei das Eingangssignal (3a) und das weitere Eingangssignal (3b) unterschiedlich codiert, vorzugsweise jedoch inhaltlich identisch sind.

13. Verfahren nach einem der vorhergehenden Ansprüche, wobei das Eingangssignal (3a) und das weitere Eingangssignal (3b) gleichzeitig an den Prozessorkern (2a), respektive an den weiteren Prozessorkern (2b) angelegt werden.

14. Verfahren nach einem der Ansprüche 1 bis 12, wobei das Eingangssignal (3a) und das weitere Eingangssignal (3b) zeitversetzt an den Prozessorkern (2a), respektive an den weiteren Prozessorkern (2b) angelegt werden.

15. Vorrichtung (1) zur Erkennung einer Manipulation und automatischen Überwachung einer Komponente (1, 2) welche mindestens einen Prozessorkern (2a) umfasst, die Vorrichtung (1) umfassend:
- die zu überwachende Komponente (1, 2);
- einen weiteren Prozessorkern (2b);
- ein Ermittlungsmittel (4), welches ausgestaltet ist, ein durch ein an den Prozessorkern (2a) angelegtes Eingangssignal (3) beeinflusstes Profil des Prozessorkerns (2a) zu ermitteln und ein durch ein an den weiteren Prozessorkern (2b) angelegtes weiteres Eingangssignal (3) beeinflusstes weiteres Profil des weiteren Prozessorkerns (2b) zu ermitteln;
- ein Vergleichsmittel (5), welches ausgestaltet ist, das Profil und das weitere Profil zu vergleichen und ein Fehlersignal (6) zu erzeugen, falls ein Vergleichsresultat eines durch das Vergleichsmittel (5) durchgeführten Vergleichs eine mangelhafte Ähnlichkeit des Profils zu dem weiteren Profil ist,
wobei die Vorrichtung (1) ausgestaltet ist, im Fall einer mangelhaften Ähnlichkeit des Profils zu dem weiteren Profil
- ein Alarmsignal (6) auszugeben und/oder
- einen Neustart der Komponente (1, 2) durchzuführen und/oder
- die Komponente (1, 2) in einen eigensicheren Zustand zu versetzen und/oder
- ein mittels der Komponente (1, 2) kontrolliertes System in einen eigensicheren Zustand zu versetzen und/oder
- die Komponente (1, 2) in einen eingeschränkten Betriebsmodus zu versetzen und/oder
- ein mittels der Komponente (1, 2) kontrolliertes System in einen eingeschränkten Betriebsmodus zu versetzen und/oder
- zusätzliche Überprüfungen durchzuführen und/oder
- einen kryptographischen Schlüssel zu löschen, für ungültig zu erklären oder zu aktualisieren.

16. Vorrichtung (1) nach Anspruch 15, wobei das Vergleichsmittel (5) ausgestaltet ist, kein Fehlersignal zu erzeugen, falls ein Vergleichsresultat des durch das Vergleichsmittel (5) durchgeführten Vergleichs eine ausreichende Ähnlichkeit des Profils zu dem weiteren Profil ist.

17. Vorrichtung (1) nach Anspruch 15 oder 16, wobei das Ermittlungsmittel (4) eine Strommesseinheit (4a, 4b) oder eine Leistungsmesseinheit für den Prozessorkern (2a) und/oder für den weiteren Prozessorkern (2b) umfasst.

18. Vorrichtung (1) nach einem der Ansprüche 15 bis 17, wobei das Vergleichsmittel (5) ausgestaltet ist, den Vergleich mittels einer Ermittlung einer Kreuzkorrelation des Profils und des weiteren Profils oder mittels einer anderen Merkmalsextraktion, wie beispielsweise mittels eines Vergleichs der Mittelwerte und/oder der Peakwerte und/oder des Frequenzspektrums des Profils und des weiteren Profils vorzunehmen.

19. Vorrichtung (1) nach einem der Ansprüche 15 bis 18, wobei das Vergleichsmittel (5) ausgestaltet ist, die mangelhafte Ähnlichkeit des Profils und des weiteren Profils mittels eines Schwellwertes (8) festzustellen.

20. Vorrichtung (1) nach einem der Ansprüche 15 bis 19, wobei das Vergleichsmittel (5) ausgestaltet ist, einen Zeitversatz zwischen dem Profil und dem weiteren Profil zu ermitteln, und wobei die mangelhafte Ähnlichkeit ein Überschreiten eines Zeitversatzschwellwertes (8) durch den ermittelten Zeitversatz ist.

21. Vorrichtung (1) nach einem der Ansprüche 15 bis 20, umfassend eine Regelung, welche ausgestaltet ist, den Zeitversatz der Takte des Prozessorkerns (2a) und/oder des weiteren Prozessorkerns (2b) zu verringern.

22. Vorrichtung (1) nach einem der Ansprüche 15 bis 21, wobei der weitere Prozessorkern (2b) durch die Komponente (1, 2) umfasst ist.

23. Vorrichtung (1) nach einem der Ansprüche 15 bis 22, umfassend eine weitere Komponente welche den weiteren Prozessorkern (2b) umfasst.

24. Vorrichtung (1) nach einem der Ansprüche 15 bis 23, wobei der Prozessorkern (2a) und der weitere Prozessorkern (2b) redundant betreibbar sind.

25. Vorrichtung (1) nach einem der Ansprüche 15 bis 24, wobei das Ermittlungsmittel (4) durch die Komponente (1, 2) umfasst ist oder durch eine zusätzliche Ermittlungskomponente umfasst ist.

26. Vorrichtung (1) nach einem der Ansprüche 15 bis 25, wobei das Eingangssignal (3) und das weitere Eingangssignal (3) identisch sind.

27. Vorrichtung (1) nach einem der Ansprüche 15 bis 26, wobei das Eingangssignal (3) und das weitere Eingangssignal (3) unterschiedlich codiert, vorzugsweise jedoch inhaltlich identisch sind.

28. Vorrichtung (1) nach einem der Ansprüche 15 bis 27, wobei das Eingangssignal (3) und das weitere Eingangssignal (3) gleichzeitig an den Prozessorkern (2a), respektive an den weiteren Prozessorkern (2b) anlegbar sind.

29. Vorrichtung nach einem der Ansprüche 15 bis 28, wobei das Eingangssignal (3) und das weitere Eingangssignal (3) zeitversetzt an den Prozessorkern (2a), respektive an den weiteren Prozessorkern (2b) anlegbar sind.

## Claims

1. Method for detecting a manipulation and automatically monitoring a component (1, 2) which comprises at least one processor core (2a), the method comprising the method steps:
- applying an input signal (3a) to the processor core (2a) and applying a further input signal (3b) to a further processor core (2b);
- determining a profile of the processor core (2a) influenced by the application of the input signal (3a) to the processor core (2a) and a further profile of the further processor core (2b) influenced by the application of the further input signal (3b) to the further processor core (2b)
- comparing the profile and the further profile, wherein an insufficient similarity between the profile and the further profile is interpreted as an indication of a malfunction of the component (1, 2),
wherein, in the case of an insufficient similarity between the profile and the further profile,
- an alarm signal is output and/or
- a restart of the component (1, 2) is carried out and/or
- the component (1, 2) is switched to an intrinsically safe state and/or
- a system monitored by means of the component (1, 2) is switched to an intrinsically safe state and/or
- the component (1, 2) is switched to a restricted operating mode and/or
- a system monitored by means of the component (1, 2) is switched to a restricted operating mode and/or
- additional checks are carried out and/or
- a cryptographic key is deleted, invalidated or updated.

2. Method according to Claim 1, wherein a sufficient similarity between the profile and the further profile is interpreted as an indication of a fault-free operation of the component (1, 2) .

3. Method according to one of the preceding claims, wherein the profile and the further profile in each case comprise or are a variation with time in the power input or in each case a variation with time in the current consumption of the respective processor core (2a, 2b).

4. Method according to one of the preceding claims, wherein the comparison of the profile and the further profile is performed by means of a determination of a cross-correlation of the profile and the further profile by means of a different feature extraction, such as, for example, by means of a comparison of the mean values and/or the peak values and/or the frequency spectrum of the profile and the further profile.

5. Method according to one of the preceding claims, wherein the insufficient similarity between the profile and the further profile is determined by means of a threshold value (8).

6. Method according to one of the preceding claims, wherein a time shift between the profile and the further profile is determined, and wherein the insufficient similarity indicates that a time shift threshold value (8) is exceeded by the determined time shift.

7. Method according to one of the preceding claims, wherein the time shift between the profile and the further profile is reduced by means of an adjustment of the clock of the processor core (2a) and/or the further processor core (2b).

8. Method according to one of the preceding claims, wherein the further processor core (2b) is comprised by the component (1, 2) .

9. Method according to one of the preceding claims, wherein the processor core (2a) and the further processor core (2b) are operated redundantly.

10. Method according to one of the preceding claims, wherein a means for determining the profile and preferably for determining the further profile is comprised by the component (1, 2).

11. Method according to one of the preceding claims, wherein the input signal (3a) and the further input signal (3b) are identical.

12. Method according to one of Claims 1 to 10, wherein the input signal (3a) and the further input signal (3b) are coded differently, but preferably have identical content.

13. Method according to one of the preceding claims, wherein the input signal (3a) and the further input signal (3b) are applied simultaneously to the processor core (2a) or to the further processor core (2b).

14. Method according to one of Claims 1 to 12, wherein the input signal (3a) and the further input signal (3b) are applied with a time shift to the processor core (2a) or to the further processor core (2b).

15. Device (1) for detecting a manipulation and automatically monitoring a component (1, 2) which comprises at least one processor core (2a), comprising
- the component (1, 2) to be monitored;
- a further processor core (2b);
- a determination means (4) which is designed to determine a profile of the processor core (2a) influenced by an input signal (3) applied to the processor core (2a) and a further profile of the further processor core (2b) influenced by a further input signal (3) applied to the further processor core (2b) ;
- a comparison means (5) which is designed to compare the profile and the further profile and to generate a fault signal (6) if a comparison result of a comparison carried out by the comparison means (5) is an insufficient similarity between the profile and the further profile,
wherein the device (1) is designed, in the case of an insufficient similarity between the profile and the further profile, to
- output an alarm signal (6) and/or
- perform a restart of the component (1, 2) and/or
- switch the component (1, 2) to an intrinsically safe state and/or
- switch a system monitored by means of the component (1, 2) to an intrinsically safe state and/or
- switch the component (1, 2) to a restricted operating mode and/or
- switch a system monitored by means of the component (1, 2) to a restricted operating mode and/or
- carry out additional checks and/or
- delete, invalidate or update a cryptographic key.

16. Device (1) according to Claim 15, wherein the comparison means (5) is designed to generate no fault signal if a comparison result of the comparison carried out by the comparison means (5) is a sufficient similarity between the profile and the further profile.

17. Device (1) according to Claim 15 or 16, wherein the determination means (4) comprises a current-measuring unit (4a, 4b) or a power-measuring unit for the processor core (2a) and/or the further processor core (2b).

18. Device (1) according to one of Claims 15 to 17, wherein the comparison means (5) is designed to carry out the comparison by means of a determination of a cross-correlation of the profile and the further profile or by means of a different feature extraction, such as, for example, by means of a comparison of the mean values and/or the peak values and/or the frequency spectrum of the profile and the further profile.

19. Device (1) according to one of Claims 15 to 18, wherein the comparison means (5) is designed to establish the insufficient similarity of the profile and the further profile by means of a threshold value (8).

20. Device (1) according to one of Claims 15 to 19, wherein the comparison means (5) is designed to determine a time shift between the profile and the further profile, and wherein the insufficient similarity indicates that a time shift threshold value (8) is exceeded by the determined time shift.

21. Device (1) according to one of Claims 15 to 20, comprising an adjustment which is designed to reduce the time shift of the clocks of the processor core (2a) and/or the further processor core (2b).

22. Device (1) according to one of Claims 15 to 21, wherein the further processor core (2b) is comprised by the component (1, 2) .

23. Device (1) according to one of Claims 15 to 22, comprising a further component which comprises the further processor core (2b) .

24. Device (1) according to one of Claims 15 to 23, wherein the processor core (2a) and the further processor core (2b) are redundantly operable.

25. Device (1) according to one of Claims 15 to 24, wherein the determination means (4) is comprised by the component (1, 2) or is comprised by an additional determination component.

26. Device (1) according to one of Claims 15 to 25, wherein the input signal (3) and the further input signal (3) are identical.

27. Device (1) according to one of Claims 15 to 26, wherein the input signal (3) and the further input signal (3) coded differently, but preferably have the same content.

28. Device (1) according to one of Claims 15 to 27, wherein the input signal (3) and the further input signal (3) are applicable simultaneously to the processor core (2a) or to the further processor core (2b).

29. Device according to one of Claims 15 to 28, wherein the input signal (3) and the further input signal (3) are applicable with a time shift to the processor core (2a) or to the further processor core (2b).

## Revendications

1. Procédé de reconnaissance d'une manipulation et de surveillance automatique d'un composant (1, 2) comprenant au moins un coeur de processeur (2a), le procédé comprenant les étapes suivantes :
- application d'un signal d'entrée (3a) au coeur de processeur (2a) et application d'un autre signal d'entrée (3b) à un autre coeur de processeur (2b) ;
- détermination d'un profil du coeur de processeur (2a) influencé par l'application du signal d'entrée (3a) au coeur de processeur (2a) et d'un autre profil de l'autre coeur de processeur (2b) influencé par l'application de l'autre signal d'entrée (3b) à l'autre coeur de processeur (2b) ;
- comparaison du profil et de l'autre profil,
une similitude imparfaite entre le profil et l'autre profil étant interprétée comme un signe de mauvais fonctionnement du composant (1, 2),
en cas de similitude imparfaite entre le profil et l'autre profil,
- un signal d'alarme étant émis et/ou
- un redémarrage du composant (1, 2) étant effectué et/ou
- le composant (1, 2) étant mis dans un état de sécurité intrinsèque et/ou
- un système contrôlé au moyen du composant (1, 2) étant mis dans un état de sécurité intrinsèque et/ou
- le composant (1, 2) étant mis dans un mode opérationnel restreint et/ou
- un système contrôlé au moyen du composant (1, 2) étant mis dans un mode opérationnel restreint et/ou
- des vérifications supplémentaires étant effectuées et/ou
- une clé cryptographique étant effacée, déclarée non valide ou actualisée.

2. Procédé selon la revendication 1, une similitude suffisante entre le profil et l'autre profil étant interprétée comme un signe de fonctionnement correct du composant (1, 2).

3. Procédé selon l'une des revendications précédentes, le profil et l'autre profil comprenant ou étant respectivement un tracé temporel de l'absorption de puissance ou respectivement un tracé temporel de la consommation de courant du coeur de processeur respectif (2a, 2b).

4. Procédé selon l'une des revendications précédentes, la comparaison du profil et de l'autre profil étant opérée au moyen d'une détermination d'une corrélation croisée du profil et de l'autre profil ou au moyen d'une autre extraction de caractéristique, par exemple, au moyen d'une comparaison des valeurs moyennes et/ou des valeurs de crête et/ou du spectre de fréquence du profil et de l'autre profil.

5. Procédé selon l'une des revendications précédentes, la similitude imparfaite entre le profil et l'autre profil étant déterminée au moyen d'une valeur seuil (8).

6. Procédé selon l'une des revendications précédentes, un décalage temporel étant déterminé entre le profil et l'autre profil et la similitude imparfaite étant un dépassement d'une valeur seuil de décalage temporel (8) par le décalage temporel déterminé.

7. Procédé selon l'une des revendications précédentes, un réglage de la vitesse du coeur de processeur (2a) et/ou de l'autre coeur de processeur (2b) permettant de réduire le décalage temporel entre le profil et l'autre profil.

8. Procédé selon l'une des revendications précédentes, l'autre coeur de processeur (2b) étant inclus dans le composant (1, 2).

9. Procédé selon l'une des revendications précédentes, le coeur de processeur (2a) et l'autre coeur de processeur (2b) fonctionnant en redondance.

10. Procédé selon l'une des revendications précédentes, un moyen de détermination du profil et, préférentiellement, de détermination de l'autre profil étant inclus dans le composant (1, 2).

11. Procédé selon l'une des revendications précédentes, le signal d'entrée (3a) et l'autre signal d'entrée (3b) étant identiques.

12. Procédé selon l'une des revendications 1 à 10, le signal d'entrée (3a) et l'autre signal d'entrée (3b) étant codés différemment, mais étant préférentiellement de contenu identique.

13. Procédé selon l'une des revendications précédentes, le signal d'entrée (3a) et l'autre signal d'entrée (3b) étant appliqués simultanément au coeur de processeur (2a) respectivement à l'autre coeur de processeur (2b).

14. Procédé selon l'une des revendications 1 à 12, le signal d'entrée (3a) et l'autre signal d'entrée (3b) étant appliqués de manière décalée dans le temps au coeur de processeur (2a) respectivement à l'autre coeur de processeur (2b).

15. Dispositif (1) de reconnaissance d'une manipulation et de surveillance automatique d'un composant (1, 2) comprenant au moins un coeur de processeur (2a), le dispositif (1) comprenant :
- le composant à surveiller (1, 2) ;
- un autre coeur de processeur (2b) ;
- un moyen de détermination (4) qui est conçu pour déterminer un profil du coeur de processeur (2a) influencé par un signal d'entrée (3) appliqué au coeur de processeur (2a) et pour déterminer un autre profil de l'autre coeur de processeur (2b) influencé par un autre signal d'entrée (3) appliqué à l'autre coeur de processeur (2b) ;
- un moyen de comparaison (5) qui est conçu pour comparer le profil et l'autre profil et pour générer un signal d'erreur (6) si un résultat d'une comparaison effectuée par le moyen de comparaison (5) est une similitude imparfaite entre le profil et l'autre profil,
le dispositif (1) étant conçu pour, en cas de similitude imparfaite entre le profil et l'autre profil,
- émettre un signal d'alarme (6) et/ou exécuter un redémarrage du composant (1, 2) et/ou
- mettre le composant (1, 2) dans un état de sécurité intrinsèque et/ou
- mettre un système contrôlé au moyen du composant (1, 2) dans un état de sécurité intrinsèque et/ou
- mettre le composant (1, 2) dans un mode opérationnel restreint et/ou
- mettre un système contrôlé par le composant (1, 2) dans un mode opérationnel restreint et/ou
- exécuter des vérifications supplémentaires et/ou
- effacer, déclarer non valide ou actualiser une clé cryptographique.

16. Dispositif (1) selon la revendication 15, le moyen de comparaison (5) étant conçu pour ne pas générer de signal d'erreur si un résultat de la comparaison effectuée par le moyen de comparaison (5) est une similitude suffisante entre le profil et l'autre profil.

17. Dispositif (1) selon la revendication 15 ou 16, le moyen de détermination (4) comprenant une unité de mesure de courant (4a, 4b) ou une unité de mesure de puissance pour le coeur de processeur (2a) et/ou pour l'autre coeur de processeur (2b).

18. Dispositif (1) selon l'une des revendications 15 à 17, le moyen de comparaison (5) étant conçu pour procéder à la comparaison au moyen d'une détermination d'une corrélation croisée entre le profil et l'autre profil ou au moyen d'une autre extraction de caractéristique, par exemple, au moyen d'une comparaison des valeurs moyennes et/ou des valeurs de crête et/ou du spectre de fréquence du profil et de l'autre profil.

19. Dispositif (1) selon l'une des revendications 15 à 18, le moyen de comparaison (5) étant conçu pour constater la similitude imparfaite entre le profil et l'autre profil au moyen d'une valeur seuil (8).

20. Dispositif (1) selon l'une des revendications 15 à 19, le moyen de comparaison (5) étant conçu pour déterminer un décalage temporel entre le profil et l'autre profil et la similitude imparfaite étant un dépassement d'une valeur seuil de décalage temporel (8) par le décalage temporel déterminé.

21. Dispositif (1) selon l'une des revendications 15 à 20, comprenant un réglage conçu pour réduire le décalage temporel de la vitesse du coeur de processeur (2a) et/ou de l'autre coeur de processeur (2b).

22. Dispositif (1) selon l'une des revendications 15 à 21, l'autre coeur de processeur (2b) étant inclus dans le composant (1, 2).

23. Dispositif (1) selon l'une des revendications 15 à 22, comprenant un autre composant qui comprend l'autre coeur de processeur (2b).

24. Dispositif (1) selon l'une des revendications 15 à 23, le coeur de processeur (2a) et l'autre coeur de processeur (2b) pouvant fonctionner en redondance.

25. Dispositif (1) selon l'une des revendications 15 à 24, le moyen de détermination (4) étant inclus dans le composant (1, 2) ou dans un composant de détermination supplémentaire.

26. Dispositif (1) selon l'une des revendications 15 à 25, le signal d'entrée (3) et l'autre signal d'entrée (3) étant identiques.

27. Dispositif (1) selon l'une des revendications 15 à 26, le signal d'entrée (3) et l'autre signal d'entrée (3) étant codés différemment, mais étant préférentiellement de contenu identique.

28. Dispositif (1) selon l'une des revendications 15 à 27, le signal d'entrée (3) et l'autre signal d'entrée (3) pouvant être appliqués simultanément au coeur de processeur (2a) respectivement à l'autre coeur de processeur (2b).

29. Dispositif selon l'une des revendications 15 à 28, le signal d'entrée (3) et l'autre signal d'entrée (3) pouvant être appliqués de manière décalée dans le temps au coeur de processeur (2a) respectivement à l'autre coeur de processeur (2b).
